# EUROPEAN PATENT APPLICATION

(11) **EP 1 465 091 A1**
(43) Date of publication of application: **06.10.2004**
(21) Application number: 02790861.5
(22) Date of filing: 25.12.2002
(51) Int. Cl.: G06F 17/60

(54) **LOAN MANAGEMENT SYSTEM ACCOMMODATED TO COLLATERAL VALUATION, LOAN MANAGEMENT DEVICE, AND LOAN MANAGEMENT METHOD**

(30) Priority: 11.01.2002 JP 2002005385; 06.08.2002 JP 2002229317
(71) Applicant: UFJ Bank Limited, Nagoya-shi, Aichi 460-0003 (JP); Mizutani, Shin, Tokyo 154-0003 (JP)
(72) Inventor: SUZUKI, Nobutake, Setagaya-ku, Tokyo 158-0091 (JP); KINBARA, Mitsuhiro, Yokohama-shi, Kanagawa 240-0022 (JP)
(74) Representative: Grünecker, Kinkeldey, Stockmair & Schwanhäusser Anwaltssozietät
(86) International application number: PCT/JP2002/013488
(87) International publication number: WO 2003/060786

(57) **Abstract**

A subject of the present invention is to provide a loan management system and a loan management method, which can facilitate security management when mainly movable property that is liable to change in state or value of the thing is taken as security, relative to a business proprietor who requires raising of working funds for stock, but has difficulty in raising the funds due to insufficient security.

The present invention is a loan management system having a security managing database provided with a loan balance managing table, a security evaluation managing table, and a loan line calculating table, and characterized by being connected via a communication network to an external system such as a VMI system having records of information about collaterals, and to a borrower terminal, and by acquiring the newest information about the collaterals from the foregoing external system to thereby carry out security management.

## Description

### Technical Field

In a loan management system, a loan management apparatus, and a loan management method wherein a loan limit is set correspondingly to security evaluation, the present invention relates to the loan management system, the loan management apparatus, and the loan management method that carry out security management while connected, via a communication network, to a computer system implementing stock management of particularly movable properties.

### Background Art

When a business about buying and selling movable properties is carried out, the period of possessing those movable properties as stock is generated. During the period, a business proprietor concerned needs working funds for possessing the stock. On the other hand, in a country where the registration system of the movable property does not exist, the stock should be offered as security by transfer (real security system in the form of once transferring a movable property or the like being an object of security to a creditor and returning it when a debt is liquidated) for receiving a loan on the security of the stock. However, it is not easy for banking agencies to grasp the quantities, locations, current prices, etc. of the stock that change every day and, even if they are grasped, it results in constant occurrence of complicated operations to manage security margins by referring to the loan balances.

In view of the foregoing problem about the security management, the present condition is such that it is quite difficult for the banking agencies to offer financing on the security of the stock. On the other hand, there are not a few cases wherein, with respect to possessed real estate such as a factory, it has been pledged for a debt loan for acquiring the real estate concerned, or a security value has decreased due to a drop in real estate price, and therefore, a security margin for new borrowing is insufficient. Accordingly, raising of working funds corresponding to the stock has been an important subject for the business proprietors.

On the other hand, with respect to the management of movable property stock, the technique called SCM (Supply Chain Management) for performing real-time physical distribution management by the use of a computer network has spread recently, and therefore, real-time grasping itself of data relating to the stock has been made possible. Further, the technique called VMI (Vendor Managed Inventory) has also appeared wherein a warehouse only for the stock is built in an area adjacent to a place of supply to thereby carry out computer management of the state of the stock. Since data about the stock is constantly grasped in SCM or VMI, if the data held by SCM or VMI and data held by a banking agency and necessary for the security management can be effectively utilized, it is considered that the complicated procedure required for the security management, i.e. the foregoing problem, can be relaxed.

### Disclosure of the Invention

In view of such a conventional problem, it is a subject of the present invention to facilitate security management wherein a thing such as a movable property that is liable to change in state or value is taken as security, by using an external system such as SCM or VMI, particularly a computer system that implements stock management of movable properties, and in addition, to manage by a computer a series of processing necessary for financing, such as execution of a loan after confirming a security margin or a loan line beginning from a loan application, and a request for additional security offer when a security value has decreased due to a value change or the like of a collateral, thereby to achieve automation and advancement of the loan management.

For accomplishing such a subject, the present invention has employed the following means.

The present invention is a loan management system comprising balance recording means for recording a loan balance per borrower; security evaluating means for evaluating a value of a collateral corresponding to said loan balance; and loan limit calculating means for referring to said balance recording means and said security evaluating means and calculating a loan limit per borrower from said loan balance and security evaluation evaluated in said security evaluating means, and characterized in that said security evaluating means refers to information about collaterals from a thing information storing device that stores information about collaterals. In this invention, it is possible to set a loan limit per borrower by connecting via the Internet or the like to an external database managing things offered as security to thereby acquire data about collaterals, and by comparing data about value evaluation of a collateral acquired therefrom with data about the loan balance. The borrower includes an applicant who has applied for a loan transaction for the first time, and the loan limit represents a so-called loan line that is set as an upper limit of a loan amount per borrower. By setting the loan line, the borrower can ensure a borrowing limit of working funds to thereby enable reception of expeditious financing.

Further, the present invention is a loan management system comprising balance recording means for recording a loan balance per borrower; security evaluating means for evaluating a value of a collateral corresponding to said loan balance; and security managing means for referring to said balance recording means and said security evaluating means and managing a surplus/deficit of a security margin based on said loan balance and security evaluation evaluated in said security evaluating means, which may also be characterized in that said security evaluating means refers to information about collaterals from a thing information storing device that stores information about collaterals. Further, it may also be characterized by having security liquidating means for carrying out liquidation relative to the loan balance following sale of the collateral. In this configuration, like in the foregoing, it is possible to manage a surplus/deficit of a security margin by connecting via the Internet or the like to an external database managing things offered as security to thereby acquire data about collaterals, and by comparing data about value evaluation of a collateral acquired therefrom with data about the loan balance. In this case, it is possible to manage a surplus/deficit of security correspondingly to a so-called tied loan carried out per collateral. On the other hand, when transferring ownership of a collateral to a lender such as a banking agency in the form of security by transfer or the like, it is also possible to calculate a liquidation amount of a surplus/deficit relative to a loan amount after sale of the collateral.

Further, the present invention is a loan management system comprising balance recording means for recording a loan balance per borrower; security evaluation recording means for recording value evaluation of a collateral corresponding to said loan balance; and loan limit calculating means for referring to said balance recording means and said security evaluation recording means and calculating a loan limit per borrower from said loan balance and said value evaluation, and characterized in that said security evaluation recording means refers to information about value evaluation of collaterals from a thing evaluation information storing device that stores evaluation information about collaterals. Further, the present invention is a loan management system comprising balance recording means for recording a loan balance per borrower; security evaluation recording means for recording value evaluation of a collateral corresponding to said loan balance; and security managing means for referring to said balance recording means and said security evaluation recording means and managing a surplus/deficit of a security margin based on said loan balance and said value evaluation, which may also be characterized in that said security evaluation recording means refers to information about value evaluation of collaterals from a thing evaluation information storing device that stores evaluation information about collaterals. It may also be characterized by having security liquidating means for carrying out liquidation relative to the loan balance following sale of the collateral. In this configuration, when a so-called SPC (Special Purpose Company, which is promoted by an enterprise or banking agency for accomplishing a specific object) for managing things of borrowers to be offered as security is promoted, it is possible to set a loan limit per borrower or manage a surplus/deficit of a security margin by connecting an external database managing things offered as security and a thing managing system in the SPC to each other via a communication network such as the Internet, acquiring data about security evaluation evaluated in the thing managing system of the SPC, and comparing the data about the security evaluation with data about the loan balance. Incidentally, the meaning of the borrower and the loan limit is the same as the foregoing. With respect to the embodiments about the so-called tied loan and the security by transfer or the like, they are also the same as the foregoing.

The loan management system may also be characterized by recording security setting in said thing information storing device or said thing evaluation information storing device with respect to a thing on which security is set. Further, the loan management system may also be characterized by receiving a request for security cancellation from said thing information storing device or said thing evaluation information storing device. In this configuration, by connecting via a communication network such as the Internet to an external database managing things offered as security, it is possible to easily acquire data about collaterals, and make clear things on which security is set, even in the external database. In the method of setting security, mortgage on real property, the right of pledge on movable property, security by transfer, or the like is included. When necessity for security cancellation occurs due to sale or the like of a thing concerned, it is also possible to receive data about the thing requesting cancellation, from the external database. It is also the same when security setting is recorded or a request for security cancellation is received relative to the foregoing managing system of the SPC.

It may also be characterized in that the thing information storing device or the thing evaluation information storing device is a computer system that performs movable property stock management, and includes information about at least one of a possessor, an article name, the number, and a current place of things. In this configuration, in cooperation with an SCM system, a VMI system, or the like, it is possible to acquire easily and quickly information about a possessor, an article name, the number, a current place, or the like of things when setting security on movable property for which the state of things is difficult to grasp.

The present invention may also be characterized in that application receiving means for receiving a loan application from an applicant terminal via a communication network is provided, and said application receiving means carries out loan judgment by referring to said loan limit calculating means. In this configuration, when an applicant who applies for a loan files an application for a loan via a communication network such as the Internet, it is possible to easily and quickly carry out loan judgment upon referring to the loan line.

It may also be characterized in that said security evaluating means carries out security evaluation by referring to an evaluation criterion storing device storing a security evaluation criterion per thing. Further, it may also be characterized in that said evaluation criterion storing device includes a designated term determined per thing, and said security evaluating means changes the security evaluation correspondingly to a lapse of said designated term. Moreover, it may also be characterized in that said evaluation criterion storing device includes a special value corresponding to a price change rate per thing, and said security evaluating means performs the security evaluation using said special value. In this configuration, it is possible to manage the security evaluation depending on a characteristic of a thing by providing an evaluation criterion per thing. For example, it is possible that a term in which a thing is generally considered to be out-of-date is designated per thing and, when the designated term has elapsed, it is excluded from the security evaluation object, or a special value reflecting volatility (implied volatility) of the price change is set per thing, and a so-called assessment rate of security evaluation is set relatively low with respect to one with high possibility of change.

It may also be characterized in that said security evaluating means performs the security evaluation by referring to a current price storing device storing a current price per thing. In this configuration, as provision for a case where the price of a thing drops, current price data of things that become objects of security is provided so as to reflect it on the security evaluation, so that the state of the security evaluation and the preservation of a loan risk owing to security can be constantly grasped.

It may also be characterized in that said thing evaluation information storing device stores thing evaluation information as a result of performing value evaluation by referring to an evaluation criterion storing device recording a value evaluation criterion per thing. Further, it may also be characterized in that said thing evaluation information storing device stores thing evaluation information as a result of performing value evaluation by referring to a current price storing device storing a current price per thing. In this configuration, even when the foregoing SPC or the like is provided, it is possible to carry out the security management like the foregoing by providing an evaluation criterion per thing to acquire evaluation information of a collateral depending on a characteristic of the thing, or by acquiring evaluation information of a collateral reflecting current price data of the thing.

It may also be characterized in that said loan limit calculating means or said security managing means calculates a loan limit amount or a security surplus/deficit amount by referring to safety degree storing means storing a safety degree corresponding to a credibility degree per borrower. Further, it may also be characterized in that said loan limit calculating means or said security managing means transmits either one of a notification of security deficit and a request for additional security to a terminal device of a borrower when a security margin of said borrower becomes insufficient. In this configuration, it is possible to determine a loan line depending on the state of credibility of a borrower by reflecting not only an extent of a security margin derived by subtracting the loan balance from the security value, but also, for example, ranking of credibility degrees of borrowers such as rating. Further, when the security becomes insufficient, it is possible to send a notification or a request for additional security to a borrower via the communication network such as the Internet.

Further, the present invention is a loan management apparatus comprising a balance storing section for storing a loan balance per borrower; a security evaluating section for evaluating a value of a collateral corresponding to said loan balance; and a loan limit calculating section for referring to said balance storing section and said security evaluating section and calculating a loan limit per borrower from said loan balance and security evaluation evaluated in said security evaluating section, and characterized in that said security evaluating section refers to information about collaterals from a thing information storing device that stores information about collaterals. It may also be a loan management apparatus comprising a balance storing section for stores a loan balance per borrower; a security evaluating section for evaluating a value of a collateral corresponding to said loan balance; and a security managing section for referring to said balance storing section and said security evaluating section and managing a surplus/deficit of a security margin based on said loan balance and security evaluation evaluated in said security evaluating section, and characterized in that said security evaluating section refers to information about collaterals from a thing information storing device that stores information about collaterals. It may also be a loan management apparatus comprising a balance storing section for storing a loan balance per borrower; a security evaluation storing section for storing value evaluation of a collateral corresponding to said loan balance; and a loan limit calculating section for referring to said balance storing section and said security evaluation storing section and calculating a loan limit per borrower from said loan balance and said value evaluation, and
characterized in that said security evaluation storing section refers to information about value evaluation of collaterals from a thing evaluation information storing device that stores evaluation information about collaterals. It may also be a loan management apparatus comprising a balance storing section for storing a loan balance per borrower; a security evaluation storing section for storing value evaluation of a collateral corresponding to said loan balance; and a security managing section for referring to said balance storing section and said security evaluation storing section and managing a surplus/deficit of a security margin based on said loan balance and said value evaluation, and characterized in that said security evaluation storing section refers to information about value evaluation of collaterals from a thing evaluation information storing device that stores evaluation information about collaterals.

Further, the present invention is a loan management method comprising a step in which a computer stores a loan balance per borrower into a storing device; a step in which the computer evaluates a security value about a collateral corresponding to said loan balance; and a step in which the computer calculates a loan limit per borrower from said loan balance and said security value, and characterized in that in the step of evaluating said security value, the computer evaluates the security value by referring to information about the collateral from a thing information storing device storing information about collaterals. It may also be a loan management method comprising a step in which a computer stores a loan balance per borrower into a storing device; a step in which the computer evaluates a security value about a collateral corresponding to said loan balance; and a step in which the computer manages a surplus/deficit of a security margin based on said loan balance and said security value, and characterized in that in the step of evaluating said security value, the computer evaluates the security value by referring to information about the collateral from a thing information storing device recording information about collaterals. It may also be a loan management method comprising a step in which a computer stores a loan balance per borrower into a storing device; a step in which the computer stores a security value of a collateral corresponding to said loan balance into the storing device; and a step in which the computer calculates a loan limit per borrower from said loan balance and said security value, and characterized in that the step of storing said security value stores the security value by referring to information about value evaluation of the collateral from a thing evaluation information storing device storing evaluation information about collaterals. It may also be a loan management method comprising a step in which a computer stores a loan balance per borrower into a storing device; a step in which the computer stores a security value of a collateral corresponding to said loan balance into the storing device; and a step in which the computer manages a surplus/deficit of a security margin based on said loan balance and said security value, and characterized in that the step of storing said security value stores the security value by referring to information about value evaluation of the collateral from a thing evaluation information storing device storing evaluation information about collaterals.

### Brief Description of the Drawings

Fig. 1 is a block diagram showing a system configuration in a first embodiment of the present invention;
Fig. 2 is a block diagram showing a configuration of a security managing database in the first to third embodiments of the present invention;
Fig. 3 is a diagram showing an example of a VMI database in the present invention;
Fig. 4 is a diagram showing an example of a loan balance managing table of the security managing database in the first embodiment of the present invention;
Fig. 5 is a diagram showing an example of a security evaluation managing table of the security managing database in the first embodiment of the present invention;
Fig. 6 is a diagram showing an example of a loan line calculating table of the security managing database in the first embodiment of the present invention;
Fig. 7 is a diagram showing an example of a thing evaluation criterion database in the present invention;
Fig. 8 is a diagram showing an example of a security managing database in a second embodiment of the present invention;
Fig. 9 is a diagram showing an example of a sale thing liquidating table in the second embodiment of the present invention;
Fig. 10 is a diagram showing the flow (from identification of a security to execution of a loan) in the first embodiment of the present invention;
Fig. 11 is a diagram showing the flow (when canceling security for delivering a collateral) in the first embodiment of the present invention;
Fig. 12 is a diagram showing the flow (when staying of a collateral has exceeded the number of designated days) in the first embodiment of the present invention;
Fig. 13 is a diagram showing the flow (when the current price of a collateral changes) in the first embodiment of the present invention;
Fig. 14 is a diagram showing a specific example of the flow in the first embodiment of the present invention;
Fig. 15 is a diagram showing the flow in a second embodiment of the present invention;
Fig. 16 is a diagram showing the flow of sale thing liquidation in a third embodiment of the present invention;
Fig. 17 is a block diagram showing a system configuration in a fourth embodiment of the present invention;
Fig. 18 is a block diagram showing a configuration of a security managing database in the fourth embodiment of the present invention;
Fig. 19 is a diagram showing the flow in the fourth embodiment of the present invention;
Fig. 20 is a diagram showing an outline of the first to third embodiments of the present invention; and
Fig. 21 is a diagram showing an outline of the fourth embodiment of the present invention.

### Best Mode for Carrying Out the Invention

Hereinbelow, preferred embodiments for carrying out the present invention will be described with reference to the drawings.

When a banking agency or the like offers financing by requiring a collateral, there are a form wherein a security is specified in advance and then a loan line (loan limit amount in which a loan can be received in principle up to a constant limit amount by filing an application) is set depending on a security value and the credibility of a borrower, and the amount of loan changes within such a limit, and a form of a so-called tied loan wherein a collateral is specified correspondingly to one loan contract. In financing of working funds, there are many cases wherein required funds repeatedly increase and decrease within the constant range, and therefore, the former, i.e. the case of setting the loan line, is popular. Herein, the former will be described as a first embodiment, and the latter will be described as a second embodiment.

With respect to a method of setting security, it is popular to establish a security interest such as the right of pledge on an object thing, but particularly when a movable property is the object, there is also a case wherein a banking agency or the like becomes nominally a possessor of the thing as security by transfer. This case will be described as a third embodiment.

In each of the foregoing embodiments, it is assumed that a banking agency offering financing directly acquires from a VMI system or the like information about things such as movable properties offered from borrowers as security, thereby to carry out security management. However, depending on a borrower, there can also be a case of promoting an SPC (Special Purpose Company) for holding stock and receiving a loan on the security thereof, at the financial request of wishing off-balancing (removal from assets·debt account items to be put on a balance sheet by selling credit, debt, etc.) of an inventory as stock and a debt loan following it. When receiving a loan by promoting the SPC as noted above, there can also be three embodiments like the foregoing depending on the forms of loans. However, those cases of promoting the SPC will be collectively described as a fourth embodiment.

### <First Embodiment>

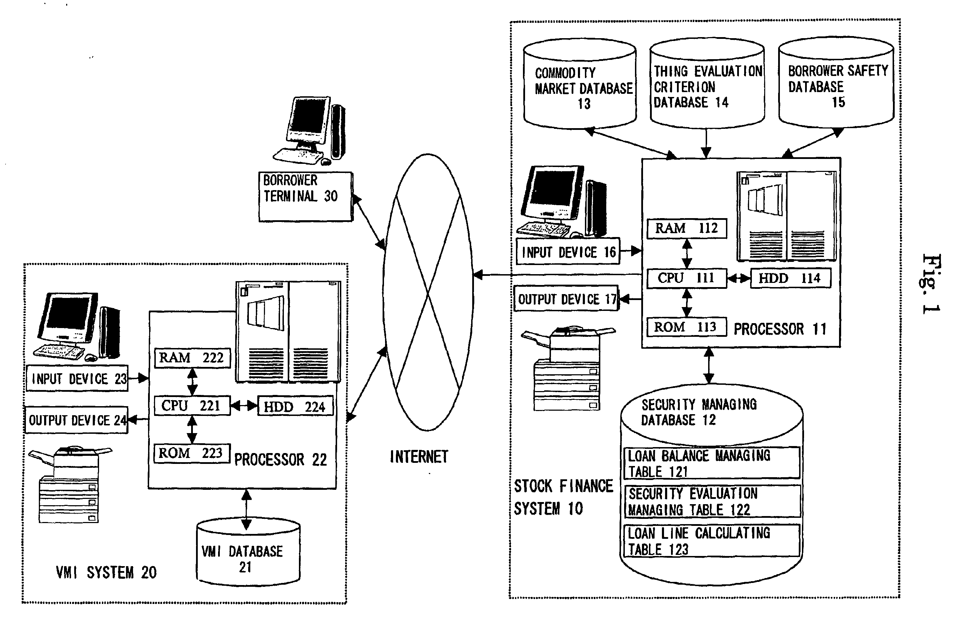

Fig. 1 shows a configuration of a loan management system according to the present invention wherein objects of security are movable properties and the movable properties are managed by the VMI system. Fig. 1 shows one example of the hardware configuration of the loan management system corresponding to the first embodiment of the present invention, wherein a stock finance system 10 serving as a system in which a banking agency manages loans on the security of stock of borrowers such as movable properties may be one that manages movable properties being objects of security by the use of the SCM system, or one that is connected to an external database managing real properties which are objects of security.

In the first embodiment shown in Fig. 1, the stock finance system 10 being the loan management system according to the present invention is connected to a VMI system 20 and a borrower terminal 30 via a communication network such as the Internet. The stock finance system 10 comprises a processor 11, a security managing database 12, a commodity market database 13, a thing evaluation criterion database 14, a borrower safety database 15, an input device 16, and an output device 17. The processor 11 includes a CPU 111, a RAM 112, a ROM 113, and an HDD 114. With respect to a series of application programs about loan management stored in the HDD 114, the CPU 111 executes arithmetic processing by starting various basic programs for a hardware control stored in the ROM 113 to thereby cause the RAM 112 to function as a work area for the application programs. The security managing database 12 includes a loan balance managing table 121, a security evaluation managing table 122, and a loan line calculating table 123. The VMI system 20 comprises a VMI database 21, a processor 22, an input device 23, and an output device 24. The processor 22 includes a CPU 221, a RAM 222, a ROM 223, and an HDD 224. In the processor 22, with respect to a series of application programs stored in the HDD 224, the CPU 221 executes arithmetic processing by starting various basic programs for a hardware control stored in the ROM 223 to thereby cause the RAM 222 to function as a work area for the application programs.

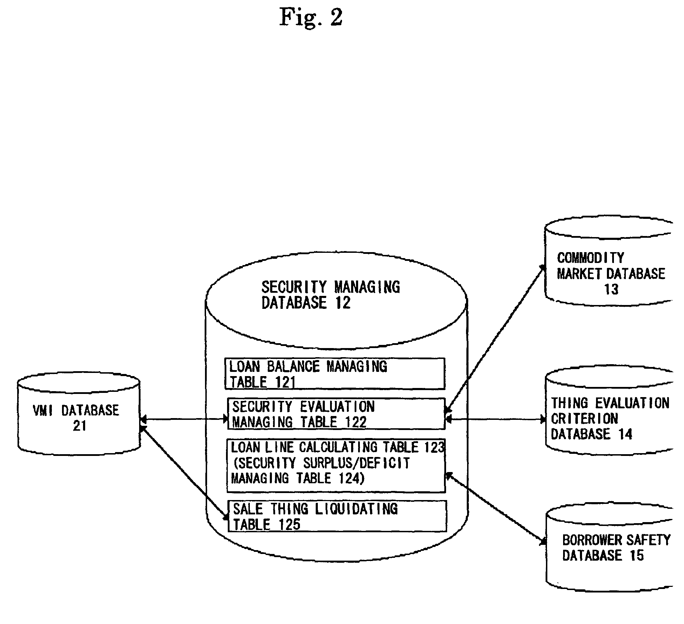

As shown in Fig. 2, the security managing database 12 is connected such that the respective tables can receive data from the other databases. The security evaluation managing table 122 can acquire data from the commodity market database 13 and the thing evaluation criterion database 14. The loan line calculating table 123 can acquire data from the borrower safety database 15.

The stock finance system 10 is connected to the VMI database 21 of the VMI system 20 via the communication network such as the Internet. Accordingly, it is possible to acquire the newest thing information from the VMI database 21 of the VMI system 20 without visiting a site such as a warehouse, and possible to confirm a location and a possessor of a thing upon specifying a collateral and constantly grasp information as to whether the collateral still exists even after setting the security.

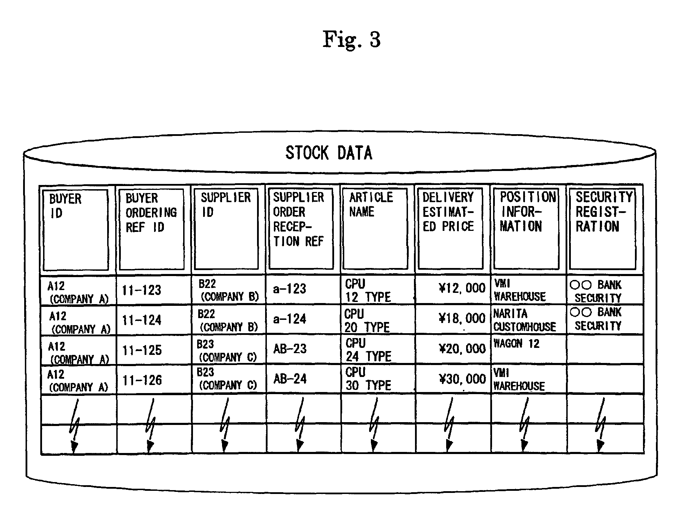

When the processor 11 receives data about a collateral acquired from the VMI database 21 of the VMI system 20 as described above, the hardware control programs stored in the ROM 113 are started to start up the application program about security evaluation stored in the HDD 114 using the RAM 112 as a working area so that arithmetic processing is executed in the CPU 111. The result of the arithmetic processing is transmitted to the security managing database 12 as data about the newest security evaluation and stored in the security evaluation managing table 122. On the other hand, when the fact that security has been set is recorded in the security managing database 12, arithmetic processing is executed in the CPU 111 according to the application program stored in the HDD 114 so that data about the security setting is transmitted to the VMI system 20 and, as shown in an example of Fig. 3, the fact that the security has been set is recorded in a record recording information about a corresponding thing in the VMI database 21. Incidentally, a field of "Security Registration" shown in Fig. 3 can include either a case where the right of pledge is established on a movable property concerned, or a case where a transfer security interest is set and a possessor is changed to a banking agency. However, in the first embodiment, the establishment of the right of pledge is recorded.

In the security evaluation with the security evaluation managing table 122, the program of updating unit prices of things for security evaluation stored in the HDD 114 is periodically started up in the processor 11 to acquire the current price about an object thing of security from the commodity market database 13 and record the current price data in the security evaluation managing table 122. On the other hand, the thing evaluation criterion database 14 includes a designated term per thing in which an object thing generally becomes out-of-date to lose its commodity value, and a special value per thing for determining an assessment rate corresponding to a risk about a thing with high volatility taking into consideration the price change rate of an object thing. It is also possible that, based on the application program stored in the HDD 114 in the processor 11, those data are acquired and the result of security evaluation obtained by arithmetic processing in the CPU 111 is recorded in the security evaluation managing table 122.

In calculation of a loan line to be recorded in the loan line calculating table 123, it is also possible to use an assessment rate that takes into consideration the credibility of a borrower, relative to a security margin calculated from the loan balance and the security evaluation. In this case, data indicative of a credibility degree such as rating data is recorded in the borrower safety database 15 with respect to a credibility degree per borrower, and it is also possible that, based on the application program stored in the HDD 114 of the processor 11, those data are acquired and the result of calculation a loan line obtained by arithmetic processing executed in the CPU 111 and the RAM 112 is recorded in the loan line calculating table 123.

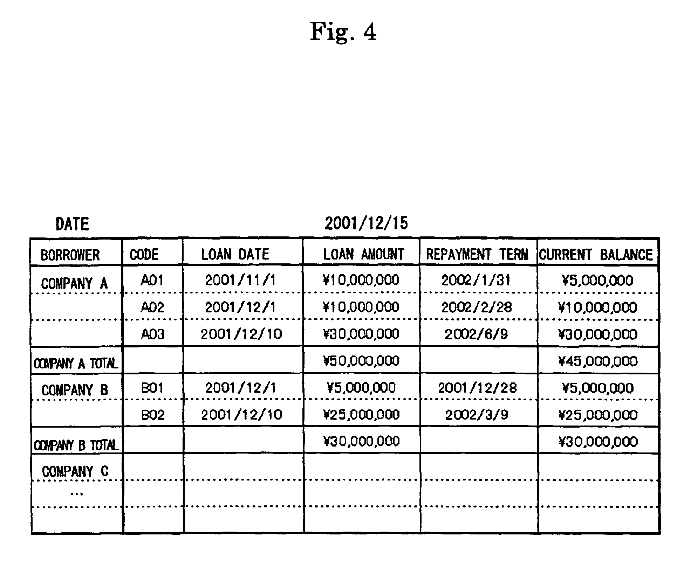

Fig. 4 shows one example of a configuration of the loan balance managing table 121 in the first embodiment. When financing is offered to the same borrower a plurality of times, records corresponding to loans of the respective times are provided, and therefore, by totaling the loan balances of all the records about specific borrowers, the loan balance per borrower can be grasped. Financing has been carried out three times with respect to Company A, and ¥45,000,000 is recorded as the total of the respective current balances. When repayment has advanced with respect to a part of the initial loan amount, it is reflected upon the loan balance (e.g. code A01).

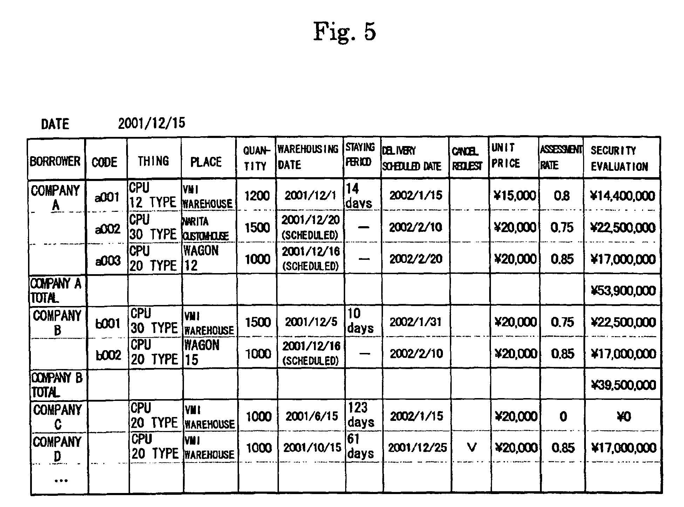

Fig. 5 shows one example of a configuration of the security evaluation managing table 122 in the first embodiment. With respect to the place and quantity of a thing, the newest data is obtained from the VMI database 21 at frequency of, for example, once a day, and recorded in a record provided per thing. With respect to the location of a thing, there is a limit up to confirmation of stock in a warehouse when manually done. However, by acquiring data from the VMI database 21, not only the case of existing within the warehouse, but also the case of existing outside the warehouse such as in a wagon can be dealt with.

Further, by providing a field of recording therein a warehousing date and recording a warehousing date therein upon setting security, the number of staying days of stock can be automatically calculated. As provision against a risk that a collateral becomes out-of-date to lose its value, it is possible to implement such management that, by determining a designated term per thing beforehand, and calculating the number of staying days from a warehousing date recorded in the security evaluation managing table 122 to compare it with the designated term, it is determined to be outside the security evaluation when the designated term is exceeded. Such processing can be performed by configuring that the application program is stored in the HDD 114 of the processor 11 and the CPU executes arithmetic processing based on the foregoing data. With respect to code c001 of Company C, the staying period is 123 days. If the designated term of CPU 20 Type being an object thing of c001 is determined to be 120 days when the security value becomes zero, the security evaluation according to c001 becomes zero. This designated term is recorded in the thing evaluation criterion database 14.

Calculation of a security value in the security evaluation managing table 122 is carried out by multiplying the quantity of a collateral by a unit price. With respect to the unit price, by acquiring data about the newest unit price from the commodity market database 13, arithmetic processing is executed in the processor 11 to thereby enable evaluation reflecting the newest market. Further, in the security evaluation managing table 122, it is possible to record an evaluated amount that is calculated by multiplying the security value obtained by multiplying the quantity of the collateral by the unit price, by an assessment rate corresponding to the price change volatility or the like per collateral. A numerical value of this assessment rate is recorded in the thing evaluation criterion database 14, taking into consideration the past price change rates or the like per thing. The security value per thing thus calculated is managed as the total security evaluated amount per borrower. In Fig. 5, the total security evaluated amount of Company A is ¥53,900,000.

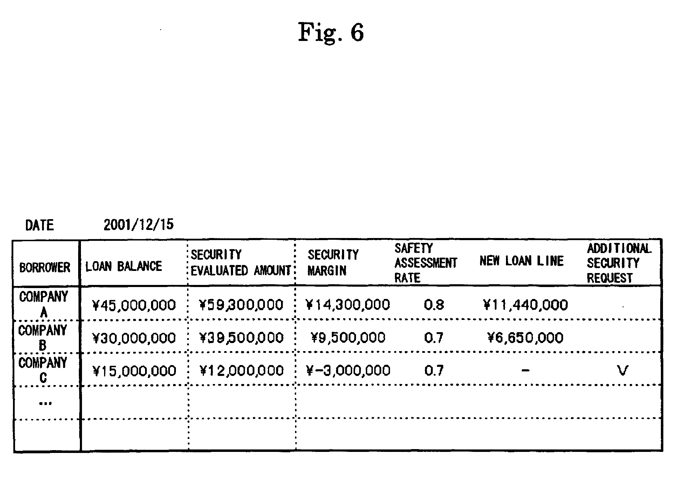

Fig. 6 shows one example of a configuration of the loan line calculating table 123 in the first embodiment. A loan line representing the upper limit of a loan amount per borrower is determined taking into consideration a security margin calculated by subtracting the loan balance from the security evaluated amount per borrower. Herein, it is also possible to determine as a loan line a value calculated by multiplying the security margin by a safety assessment rate determined by taking into consideration the credibility per borrower. A numerical value of this safety assessment rate is recorded in the borrower safety database 15. A new loan line is calculated from the respective total amounts of the loan balances and the security evaluated amounts, and it can be prescribed that if it is within the designated limit, a new loan can be received as a rule. Incidentally, if a loan line is determined based on the security margin, but does not take into account the credibility of the borrower, it is also possible to set a loan line by setting the safety assessment rates to 1 uniformly.

Further, it is possible to provide a field in the loan line calculating table 123 for checking necessity of an additional security request, thereby to allow an offer of additional security to be requested when the security margin becomes minus. In Fig. 6, the security margin of Company C is ¥-3,00,000 and, for showing that an additional security request is necessary for Company C, a flag is raised in the field of "Additional Security Request". If the application program for periodically searching for this flag is recorded in the HDD 114 of the processor 11, when a borrower concerned is found, it is possible to transmit data about a request for additional security offering to the subject borrower via the communication network such as the Internet.

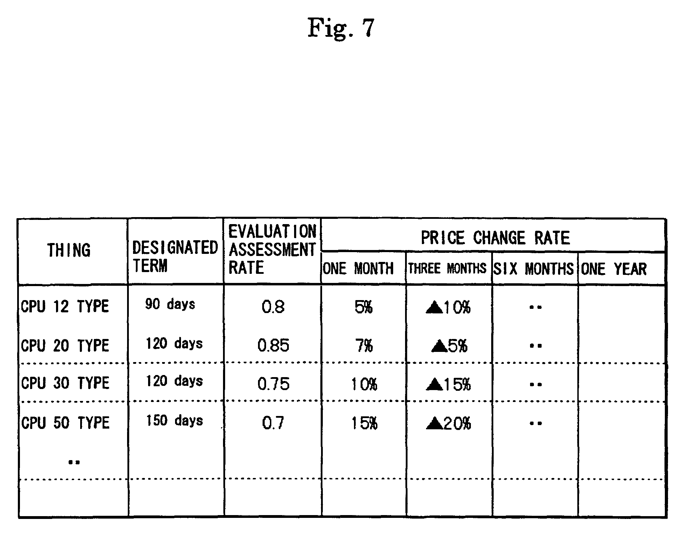

Fig. 7 shows one example of the thing evaluation criterion database 14. With respect to a record provided per thing, there are provided fields for the designated term representing a general out-of-date term, and the evaluation assessment rate taking the price change rate into consideration.

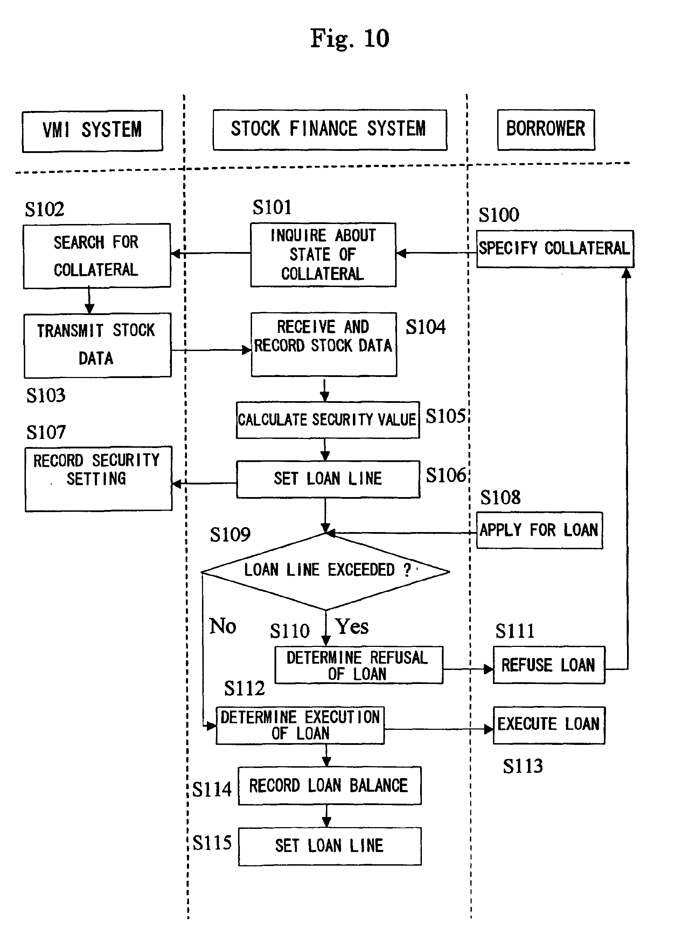

In the first embodiment of the present invention, the flow from identification of a collateral to execution of a loan will be described using Fig. 10. An applicant (borrower) who wishes for apply for a loan first specifies a collateral that can be offered for receiving a loan (S100), and transmits data to the stock finance system 10. The stock finance system 10 inquires of the VMI system 20 about the state of a possessor, a location, etc. of the thing concerned (S101). In the VMI system 20, the referred thing is searched for (S102), and stock data about the subject thing is transmitted to the stock finance system 10 (S103). In the stock finance system 10, the stock data is received and recorded in the security managing database 12 (S104). In the stock finance system 10, a security value calculated in the processor 11 is recorded in the security managing database 12 (S105), and a loan line for the applicant is set (S106). In addition, data is transmitted to the VMI system 20 to thereby record setting of security (S107). When the applicant (borrower) applies for a loan (S108), the stock finance system 10 compares between a loan amount requested by the applicant and the loan line recorded in the security managing database 12 to thereby judge whether or not financing is possible (S109). When the requested amount exceeds the loan line, refusal of the loan is determined (S110), and a notification of refusal of the loan is given to the applicant (S111). It is possible for the refused applicant to specify a new additional collateral (S100) and receive again a loan examination. When the requested amount does not exceed the loan line, execution of the loan is determined (S112), and the loan is executed (S113). The loan balance is recorded in the security managing database 12 of the stock finance system 10 (S114), and a new loan line reflecting the loan balance is set (S115).

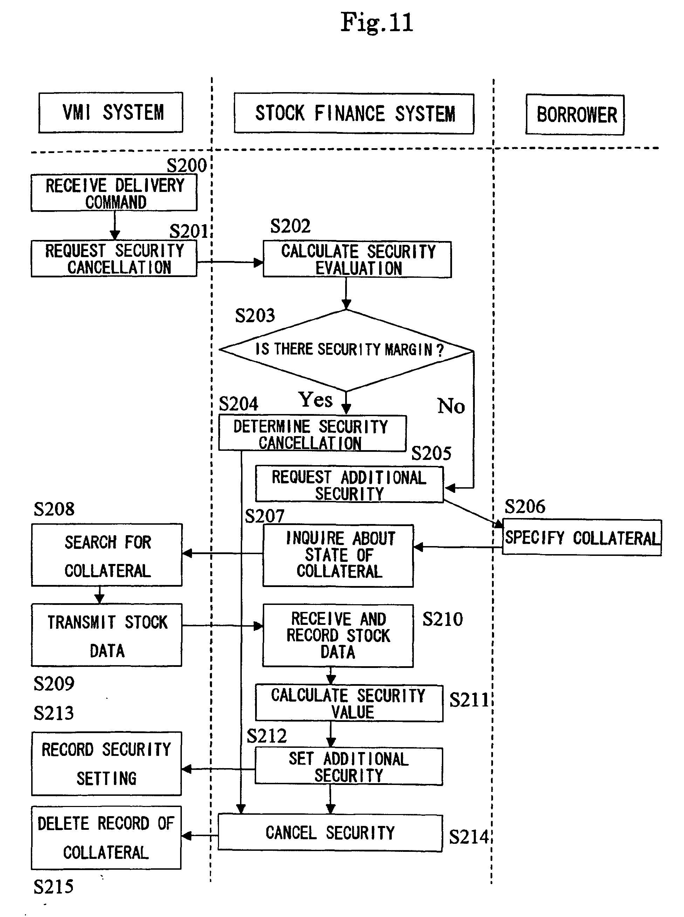

In the first embodiment of the present invention, the flow upon canceling security for delivering a collateral will be described using Fig. 11. When the VMI system 20 receives a delivery command about stock being a collateral (S200), it becomes necessary to cancel a security interest about the stock concerned. When a request for security cancellation is transmitted to the stock finance system 10 (S201), the processor 11 of the stock finance system 10 calculates new security evaluation after security cancellation according to the thing concerned (S202), and judges whether or not there is a security margin relative to the new security evaluated amount (S203). When there is a security margin, security cancellation is determined (S204), a procedure of security cancellation is carried out (S214), and a record as the collateral is deleted from the VMI system 20 (S215). On the other hand, when it is judged that the security is insufficient, a request for additional security offer is transmitted to a borrower (S205), and the borrower receiving the request specifies a new collateral (S206). Subsequent processing (S207 to S213) is like the foregoing flow. After the additional security is set, security cancellation is carried out (S214), and a record of the collateral is deleted from the VMI system 20 (S215).

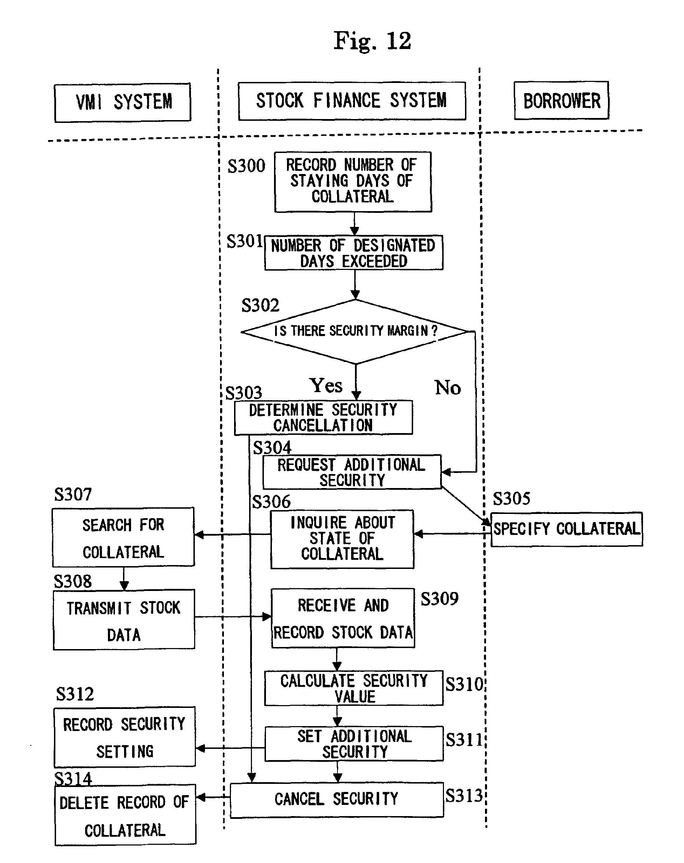

In the first embodiment of the present invention, the flow when staying of a collateral has exceeded the number of designated days, will be described using Fig. 12. In the security managing database 12 of the stock finance system 10, the numbers of staying days of collaterals are automatically updated and recorded (S300). When the number of staying days exceeds the number of designated days (S301), a security evaluated amount excluding the thing concerned is calculated, and it is judged whether or not there is a security margin with the new security evaluated amount (S302). When it is recognized that there is the security margin, security cancellation is determined about the subject thing (S303), a procedure of security cancellation is carried out (S313), and a record of the collateral is deleted from the VMI system 20 (S314). On the other hand, when it is judged that the security is insufficient, a request for additional security offer is transmitted to a borrower (S304), and subsequent processing (S305 to S314) is like the foregoing flow.

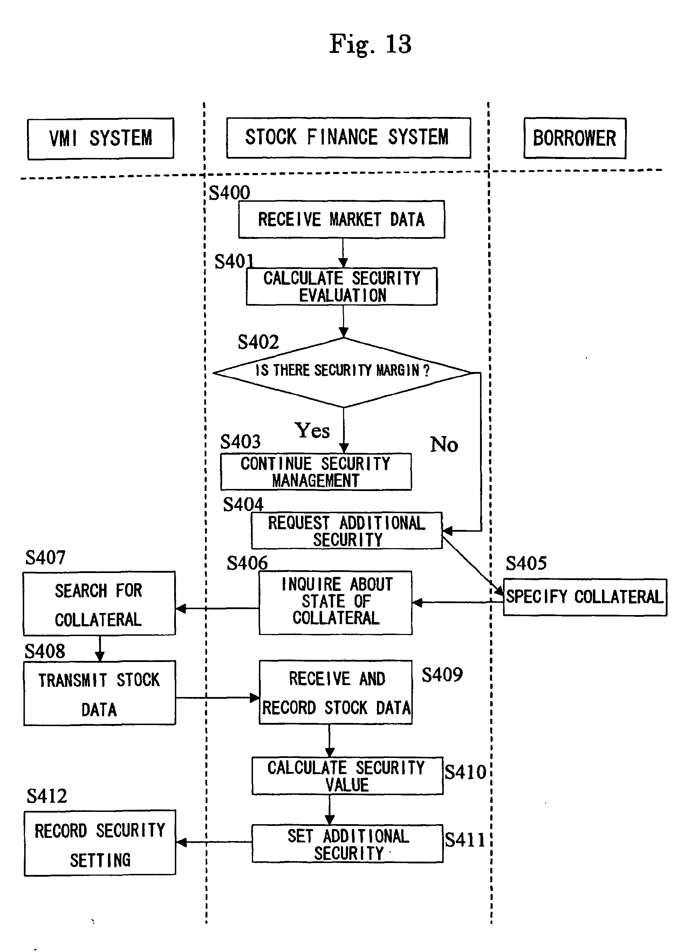

In the first embodiment of the present invention, the flow when the current price of a collateral has changed will be described using Fig. 13. In the security managing database 12 of the stock finance system 10, market data with respect to the current prices of collaterals are received from the commodity market database 13 (S400). When the current price is updated, the processor 11 calculates a new security evaluated amount (S401), and judges whether or not there is a security margin relative to the new security evaluated amount (S402). When there is the security margin, the security management is continued (S403). When it is judged that the security is insufficient, a request for additional security offer is transmitted to a borrower (S404). The borrower having received the request specifies a new collateral (S405), and subsequent processing (S406 to S412) is like the foregoing flow.

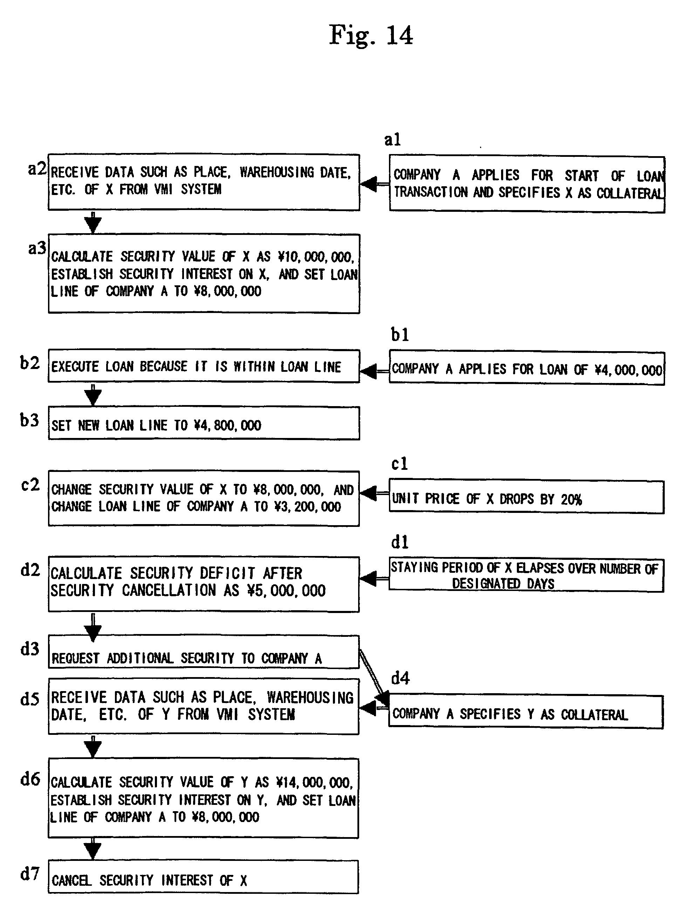

Now, using Fig. 14, description will be given about a specific example of the flow in the first embodiment of the present invention. When Company A applies for the start of a loan transaction, it also specifies stock X, as a collateral, managed in the VMI system (a1). A banking agency or the like being a manager of the stock finance system receives data such as a location, a warehousing date, etc. about X from the VMI system (a2). When a security value of X is calculated as ¥10,000,000, if a safety assessment rate according to the credibility of Company A is 0.8, a loan line is set to ¥8,000,000 (a3). When Company A further applies for a loan of ¥4,000,000 (b1), the loan is executed because it is within the limit of the loan line of ¥8,000,000 of Company A (b2). Since the balance becomes ¥4,000,000 after the execution of the loan, a new loan line becomes ¥4,800,000 calculated by multiplying ¥6,000,000 obtained by subtracting the loan balance of ¥4,000,000 from the security evaluated amount of ¥10,000,000, by the safety assessment rate of 0.8 (b3). When the unit price of X being the collateral drops by 20% (c1), the security value of X is also updated on the basis of the current price so as to be ¥8,000,000 calculated by subtracting 20% from ¥10,000,000. As a result, a new loan line of Company A becomes Y3,200,000 calculated by multiplying ¥4,000,000 obtained by subtracting the loan balance of ¥4,000,000 from ¥8,000,000, by the safety assessment rate of 0.8 (c2). When the number of staying days of X has exceeded the number of designated days (d1), since X is excluded from the security evaluation object, a security deficit amount when the security interest is cancelled is calculated as ¥5,000,000 derived by dividing the loan balance of ¥4,000,000 of Company A by the safety assessment rate of 0.8 (d2). The banking agency or the like requests additional security offer to Company A (d3), and Company A specifies Y as a new collateral (d4). The banking agency or the like receives data such as a location, a warehousing date, etc. about Y from the VMI system (d5). When a security value of Y is calculated as ¥14,000,000, a security margin becomes ¥10,000,000 derived by subtracting the loan balance of Y4,000,000 therefrom, and a new loan line of ¥8,000,000 is set by multiplying it by the safety assessment rate of 0.8 (d6). Then, the banking agency or the like cancels the security interest about X (d7).

### <Second Embodiment>

Now, description will be given about the second embodiment being a so-called tied loan wherein collaterals are specified corresponding to individual loan contracts. A hardware configuration in the second embodiment replaces the loan line calculating table 123 by a security surplus/deficit managing table 124, in the security managing database 12 shown in Figs. 1 and 2.

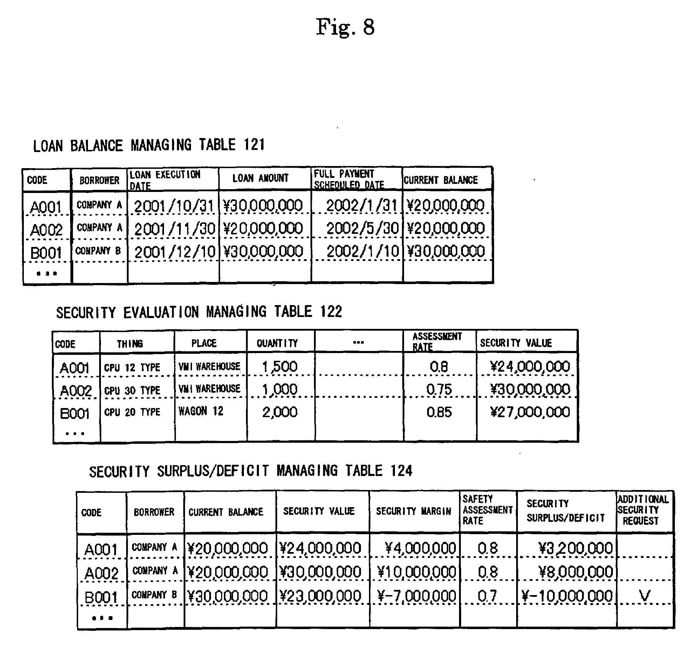

Fig. 8 shows one example of a configuration of a security managing database 12 in the second embodiment. Each of items of a loan balance managing table 121 and a security evaluation managing table 122 is the same as that in the first embodiment. However, since individual loans and collaterals are in a corresponding relationship, the management is not implemented on the basis of the total amount per borrower like in the first embodiment, but a code number is allocated per individual loan contract unit or per collateral corresponding thereto. Instead of the loan line calculating table 123 that calculates the loan line from the total amount per borrower in the first embodiment, the security surplus/deficit managing table 124 refers to a loan balance and a security value per individual loan contract unit using a code number as a key so that a security surplus/deficit is calculated in the processor 11. When a security deficit occurs, information about an additional security request is transmitted.

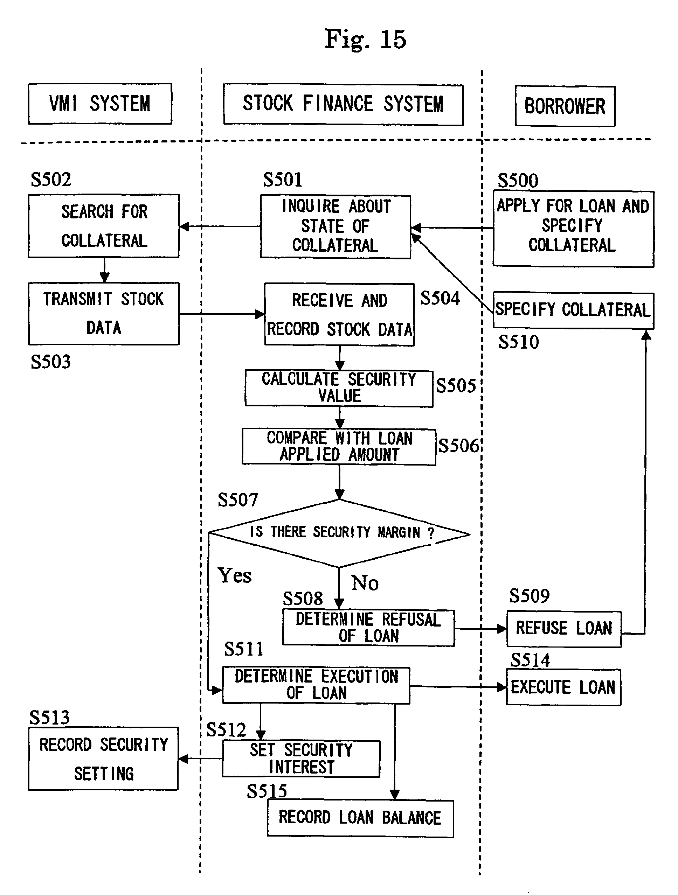

The flow in the second embodiment of the present invention will be described using Fig. 15. An applicant (borrower) wishing to apply for a loan specifies a collateral that can be offered, along with applying for a loan (S500). The stock finance system 10 inquires of the VMI system 20 about the state of a possessor, a location, etc. of the thing concerned (S501). In the VMI system 20, the referred thing is searched for (S502), and stock data about the subject thing is transmitted to the stock finance system 10 (S503). In the stock finance system 10, the stock data is received and recorded in the security managing database 12 (S504). A security value calculated in the processor 11 is recorded in the security managing database 12 (S505), and the processor 11 compares between a loan applied amount and the security value (S506) to thereby judge whether or not there is a security margin (S507). When the security margin is insufficient, refusal of the loan is determined (S508), and a notification of refusal of the loan is given to the applicant (S509). It is possible for the refused applicant to specify a new additional collateral (S510) and receive again a loan examination. When the security margin is recognized, execution of the loan is determined (S511), and the loan is executed (S514). In addition, a security interest is set (S512), and setting of the security interest is recorded in the VMI system 20 (S513). The loan balance is recorded in the security managing database 12 of the stock finance system 10 (S515).

### <Third Embodiment>

Further, description will be given about the third embodiment wherein a banking agency or the like becomes nominally a possessor of a thing as security by transfer. A hardware configuration in the third embodiment includes a sale thing liquidating table 125 of the security managing database 12 shown in Fig. 2.

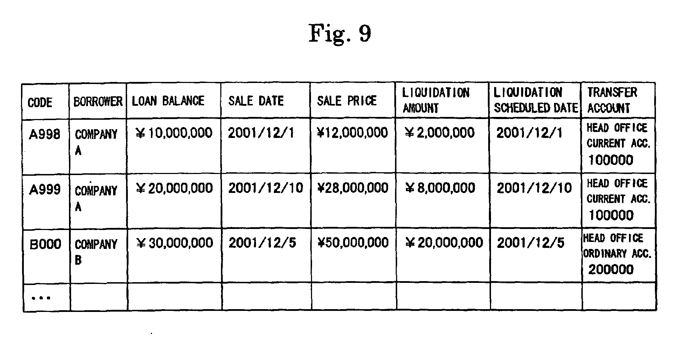

Fig. 9 shows one example of a configuration of the sale thing liquidating table 125 in the third embodiment. A sale price of a collateral is once acquired by the banking agency who has offered financing. However, the difference between the loan balance and the collateral sale amount is calculated to thereby calculate a liquidation amount. With respect to calculation of the liquidation amount, there are a case of paying an interest separately and a case of calculating it including a payment amount of an interest. When a surplus occurs in the collateral sale amount, a liquidation amount is transferred to a designated account of a borrower from the banking agency or the like concerned, while, in case of being insufficient, a deficit amount is paid to the banking agency from the borrower.

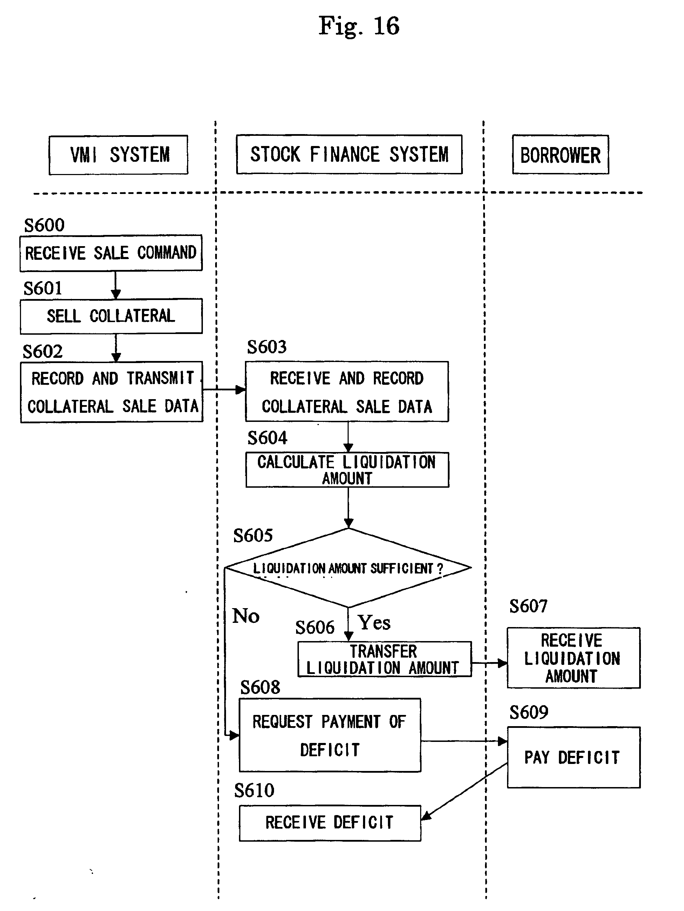

In the flow in the third embodiment of the present invention, the flow of liquidation relative to a borrower after selling a collateral will be described using Fig. 16. When the VMI system 20 receives a sale command about a certain thing being an object of security (S600), the collateral is sold (S601), and data with a record about the sale is transmitted to the stock finance system 10 (S602). When the stock finance system 10 receives and records the data about sale of the collateral (S604), the processor 11 calculates a liquidation amount from the sale price and the loan balance (S604). A surplus/deficit of the liquidation amount is calculated (S605). When a surplus is generated, a command of transfer to a borrower about the liquidation amount, or the like is produced so that liquidation is carried out (S606-S607). When the sale price is insufficient relative to the loan balance, information about a request for payment of a deficit is transmitted to a borrower (S608), and liquidation is finished by payment of the deficit by the borrower (S609-S610).

### <Fourth Embodiment>

Further, description will be given about the fourth embodiment wherein an SPC is promoted. In this embodiment, mainly a configuration of a system provided on the side of a banking agency and the form of reception of data from the VMI system differ from those of the foregoing first to third embodiments. Therefore, these different points will be mainly described hereinbelow. Also in the fourth embodiment, with respect to the methods of security evaluation and loan management, there exist methods corresponding to the foregoing first to third embodiments, respectively.

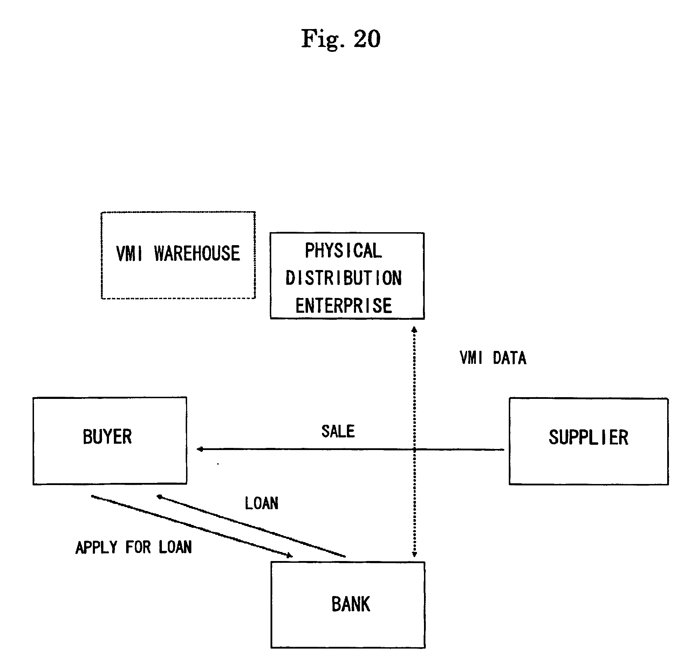

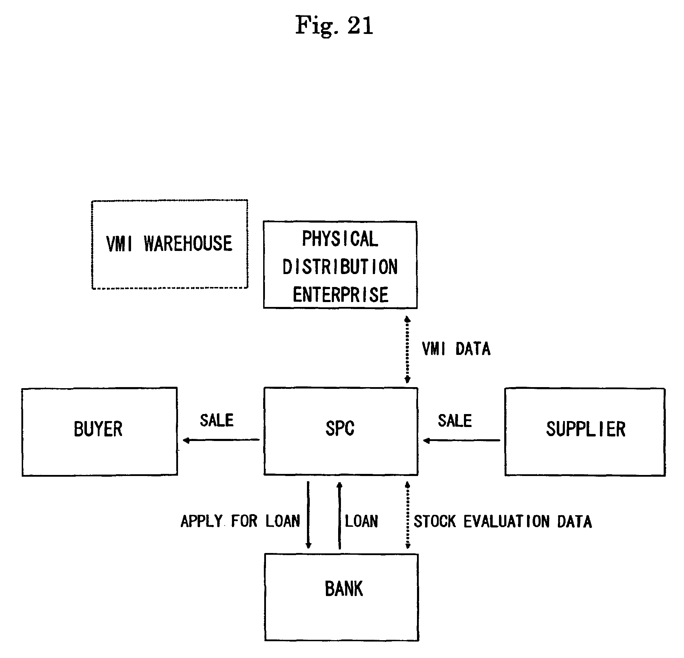

First, description will be given about a difference in business scheme when the SPC is promoted. Fig. 20 shows one example of an outline of a business scheme in the first to third embodiments. Herein, a buyer (buyer of commodities or the like that become collaterals) that purchases movable properties such as parts from a supplier (seller of commodities or the like that become collaterals) manages the purchased parts in a VMI warehouse of a physical distribution enterprise so that a bank acquires data from the VMI system to perform security evaluation, and thus can execute financing of working funds for the buyer. On the other hand, Fig. 21 shows one example of an outline of a business scheme in the fourth embodiment. Herein, an SPC having a business firm function of purchasing movable properties such as parts from a supplier is promoted, and the SPC manages the purchased parts in a VMI warehouse of a physical distribution enterprise so that the SPC acquires data from the VMI system to implement stock management and evaluation, and therefore, a bank acquires this evaluation data and utilizes it for security evaluation to thereby enable execution of financing of working funds for the SPC. Even in this case, the bank may acquire data directly from the VMI system like in Fig. 20. However, in view of the fact that the SPC is practically promoted for the purpose of managing collaterals, it is considered that the embodiment is preferably configured as shown in Fig. 21.

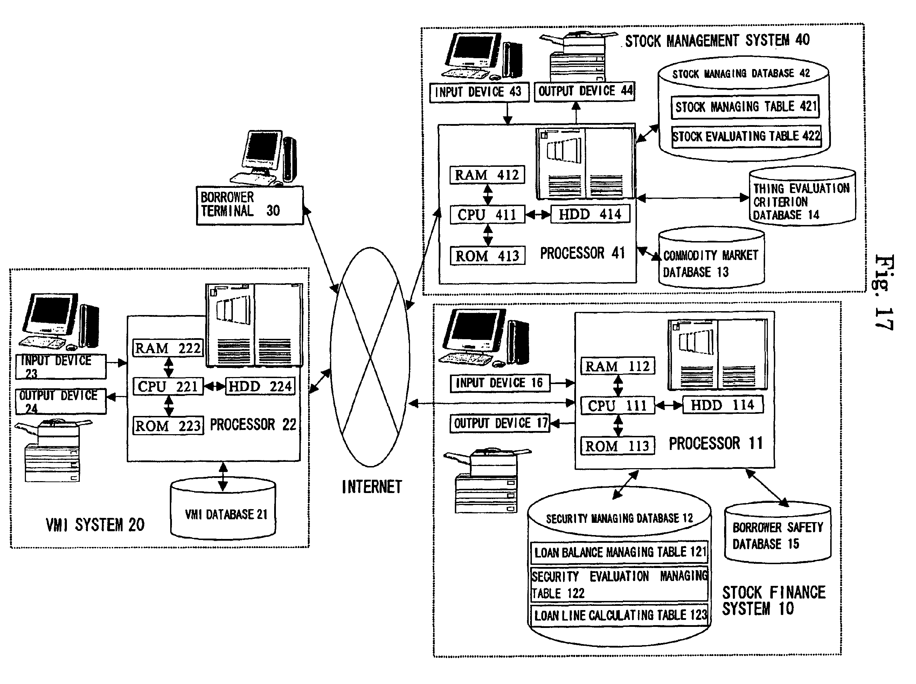

Referring to Fig. 17, a hardware configuration in the fourth embodiment will be described. A stock finance system 10 being a loan management system is connected to a borrower terminal 30 and a stock management system 40 including a stock managing database 42 via a communication network such as the Internet. The stock management system 40 including the stock managing database 42 is managed by the SPC and configured so as to enable transmission/reception of data relative to a VMI database 21 in a VMI system 20 via the communication network such as the Internet. The stock managing database 42 includes a stock managing table 421 and a stock evaluating table 422 recording stock evaluation using data of the stock managing table 421. The stock managing database 42 is connected to a commodity market database 13 and a thing evaluation criterion database 14 via a processor 41 so as to enable transmission/reception of data relative thereto. The processor 41 includes a CPU 411, a RAM 412, a ROM 413, and an HDD 414 and executes processing according to a series of programs about stock evaluation and stock management. The stock finance system 10 comprises a processor 11, a security managing database 12, and a borrower safety database 15. The processor 11 includes a CPU 111, a RAM 112, a ROM 113, and an HDD 114 and executes processing according to a series of programs about loan management. The security managing database 12 includes a loan balance managing table 121, a security evaluation managing table 122, and a loan line calculating table 123.

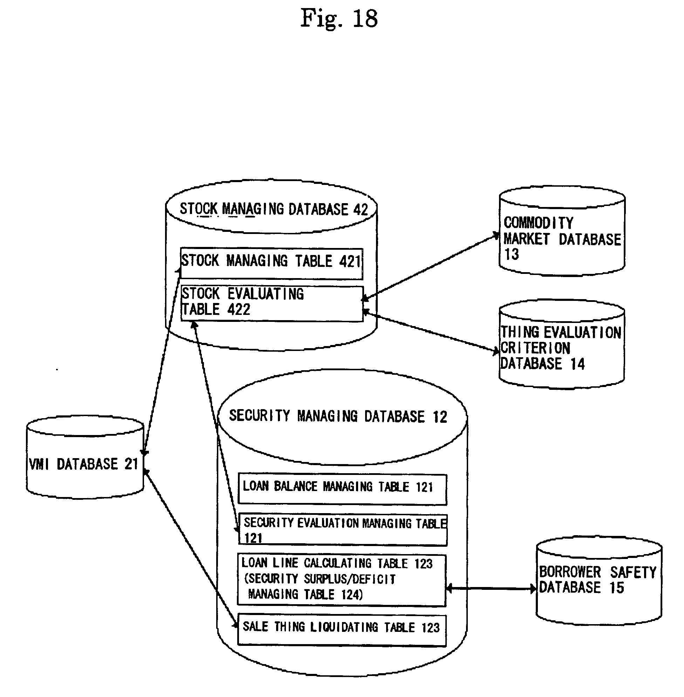

As shown in Fig. 18, the stock managing database 42 and the security managing database 12 are connected such that tables thereof can receive data from other databases. The commodity market database 13 and the thing evaluation criterion database 14 can acquire data from the stock evaluating table 422 of the stock managing database 42, and arithmetic processing about stock value evaluation is executed in the processor 41 by referring to those databases with respect to data recorded in the stock managing table 421, so that the stock evaluation is recorded in the stock evaluating table 422. The security evaluation managing table 122 of the security managing database 12 acquires evaluation data of stock offered as security from the stock evaluating table 422 of the stock managing database 42 via the communication network such as the Internet, and manages the security evaluation. The borrower safety database 15 is connected so as to enable data acquisition from the loan line calculating table 123. Among them, depending on a difference of the embodiments in security evaluation and loan management, the loan line calculating table 123 may be replaced with the security surplus/deficit managing table, or the sale thing liquidating table 124 may be included in the security managing database 12.

In this fourth embodiment, by arranging that the SPC acquires real-time stock data from the VMI system, and the management of stock data in the SPC and the security management in the banking agency are unitarily operated, security evaluation and loan management like the first to third embodiments can be carried out. Specifically, since the stock finance system 10 can implement the security management reflecting data of the VMI database 21 via the communication network such as the Internet, it is possible to acquire the newest thing information from the VMI database 21 without visiting a site such as a warehouse, and possible to confirm a location and a possessor of a thing upon specifying a collateral and constantly grasp information as to whether the collateral still exists even after setting the security.

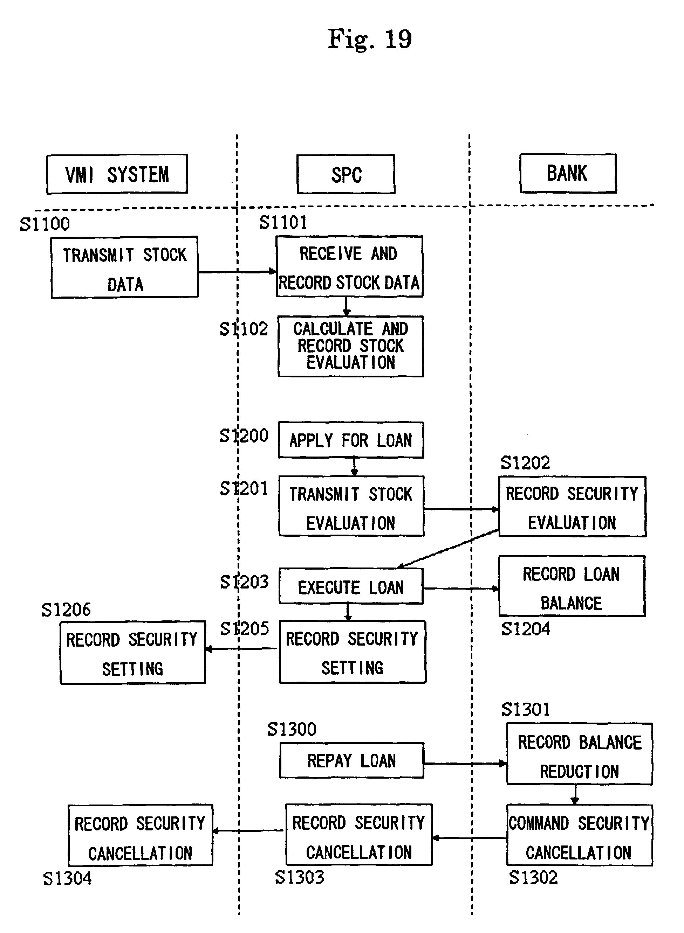

The flow in the fourth embodiment of the present invention will be described using Fig. 19. When the SPC that performs the stock management of a buyer (buyer of commodities or the like that become collaterals) for receiving a loan utilizing the VMI system is promoted, stock data is transmitted to the SPC from the VMI system 20 (S1100), the received stock data is recorded in the stock managing table 421 of the stock managing database 42 (S1101). Further, stock evaluation is calculated in the processor 11 by referring to the stock data, the commodity market database 13, and the thing evaluation criterion database 14 and recorded in the stock evaluating table 422 (S1102). Then, when the SPC, which becomes a borrower, transmits information about application for a loan to the banking agency from the borrower terminal 30 or the like (S1200), the stock managing system 40 of the SPC specifies a collateral that can be offered for receiving a loan, and data about stock evaluation recorded in the stock evaluating table 422 with respect to the stock specified as the collateral is transmitted to the stock finance system 10 (S1201). When this data is received in the stock finance system 10, it is recorded in the security evaluation managing table 122 of the security managing database 12 (S1202), and financing is executed (S1203). Incidentally, when the security evaluation amount does not reach a certain amount such as a loan applied amount, the loan may be refused. When the loan is executed, the loan balance is recorded in the loan balance recording table 121 of the security managing database 12 (S1204), and the security setting is recorded in the stock managing table 421 of the stock managing database 42 (S1205). Further, there is a case where the security setting is also recorded in the VMI database 21 (S1206). When the price is paid to the SPC from the buyer, the loan is repaid from that price (S1300). When the stock finance system 10 receives data about the loan repayment from the borrower terminal 30 or the like, reduction of the balance corresponding to the repaid amount is recorded in the loan balance recording table 121 of the security managing database 12 (S1301). When a command for security cancellation is transmitted from the stock finance system 10 (S1302), the security cancellation is recorded in the stock managing table 421 of the stock managing database 42 (S1303). Further, there is a case where the security cancellation is also recorded in the VMI database 21 (S1304).

### Industrial Applicability

According to the present invention, it becomes possible for a banking agency to grasp the state of stock in cooperation with data of a VMI system or the like, and finance working funds on the security of the stock concerned even to a business proprietor who requires raising of working funds for stock, but has difficulty in raising the funds due to insufficient security. Particularly, since an enterprise in a growth period has high demand for increased working funds following an increase of stock, an effect in support of the growth enterprise is outstanding. Further, since the newest data from the VMI system or the like can be utilized in the security management, it is also possible to enhance safety on credit management of the banking agency by grasping security values more accurately.

Also for a business proprietor who receives a loan, it becomes easy to receive a loan of working funds on the security of movable property stock that was difficult to offer as security conventionally. Further, inasmuch as the subject loan system is connected via a communication network to a terminal of a business proprietor who receives a loan, there is also raised an effect that a procedure of loan application is automated to improve facilitation.

## Claims

1. A loan management system comprising:
balance recording means for recording a loan balance per borrower;
security evaluating means for evaluating a value of a collateral corresponding to said loan balance; and
loan limit calculating means for referring to said balance recording means and said security evaluating means and calculating a loan limit per borrower from said loan balance and security evaluation evaluated in said security evaluating means,
said loan management system **characterized in that**
said security evaluating means refers to information about collaterals from a thing information storing device that stores information about collaterals.

2. A loan management system comprising:
balance recording means for recording a loan balance per borrower;
security evaluating means for evaluating a value of a collateral corresponding to said loan balance; and
security managing means for referring to said balance recording means and said security evaluating means and managing a surplus/deficit of a security margin based on said loan balance and security evaluation evaluated in said security evaluating means,
said loan management system **characterized in that**
said security evaluating means refers to information about collaterals from a thing information storing device that stores information about collaterals.

3. A loan management system comprising:
balance recording means for recording a loan balance per borrower;
security evaluation recording means for recording value evaluation of a collateral corresponding to said loan balance; and
loan limit calculating means for referring to said balance recording means and said security evaluation recording means and calculating a loan limit per borrower from said loan balance and said value evaluation,
said loan management system **characterized in that**
said security evaluation recording means refers to information about value evaluation of collaterals from a thing evaluation information storing device that stores evaluation information about collaterals.

4. A loan management system comprising:
balance recording means for recording a loan balance per borrower;
security evaluation recording means for recording value evaluation of a collateral corresponding to said loan balance; and
security managing means for referring to said balance recording means and said security evaluation recording means and managing a surplus/deficit of a security margin based on said loan balance and said value evaluation,
said loan management system **characterized in that**
said security evaluation recording means refers to information about value evaluation of collaterals from a thing evaluation information storing device that stores evaluation information about collaterals.

5. A loan management system according to claim 2 or 4, **characterized by** having security liquidating means for carrying out liquidation relative to the loan balance following sale of the collateral.

6. A loan management system according to claim 1 or 2, **characterized in that** said loan management system records security setting in said thing information storing device with respect to a thing on which security is set.

7. A loan management system according to claim 3 or 4, **characterized in that** said loan management system records security setting in said thing evaluation information storing device with respect to a thing on which security is set.

8. A loan management system according to claim 1 or 2, **characterized in that** said loan management system receives a request for security cancellation from said thing information storing device.

9. A loan management system according to claim 3 or 4, **characterized in that** said loan management system receives a request for security cancellation from said thing evaluation information storing device.

10. A loan management system according to claim 1 or 2, **characterized in that** said thing information storing device is a computer system that performs movable property stock management, and includes information about at least one of a possessor, an article name, the number, and a current place of things.

11. A loan management system according to claim 3 or 4, **characterized in that** said thing evaluation information storing device is a computer system that performs movable property stock management, and includes information about at least one of a possessor, an article name, the number, and a current place of things.

12. A loan management system according to any of claims 1 to 4, **characterized in that** application receiving means for receiving a loan application from an applicant terminal via a communication network is provided, and said application receiving means carries out loan judgment by referring to said loan limit calculating means.

13. A loan management system according to claim 1 or 2, **characterized in that** said security evaluating means carries out security evaluation by referring to an evaluation criterion storing device storing a security evaluation criterion per thing.

14. A loan management system according to claim 13, **characterized in that** said evaluation criterion storing device includes a designated term determined per thing, and said security evaluating means changes the security evaluation correspondingly to a lapse of said designated term.

15. A loan management system according to claim 13, **characterized in that** said evaluation criterion storing device includes a special value corresponding to a price change rate per thing, and said security evaluating means performs the security evaluation using said special value.

16. A loan management system according to claim 1 or 2, **characterized in that** said security evaluating means performs the security evaluation by referring to a current price storing device storing a current price per thing.

17. A loan management system according to claim 3 or 4, **characterized in that** said thing evaluation information storing device stores thing evaluation information as a result of performing value evaluation by referring to an evaluation criterion storing device storing a value evaluation criterion per thing.

18. A loan management system according to claim 3 or 4, **characterized in that** said thing evaluation information storing device stores thing evaluation information as a result of performing value evaluation by referring to a current price storing device storing a current price per thing.

19. A loan management system according to claim 1 or 3, **characterized in that** said loan limit calculating means calculates a loan limit amount by referring to a safety degree storing device storing a safety degree corresponding to a credibility degree per borrower.

20. A loan management system according to claim 2 or 4, **characterized in that** said security managing means calculates a security surplus/deficit by referring to a safety degree storing device storing a safety degree corresponding to a credibility degree per borrower.

21. A loan management system according to claim 1 or 3, **characterized in that** said loan limit calculating means transmits either one of a notification of security deficit and a request for additional security to a terminal device of a borrower when a security margin of said borrower becomes insufficient.

22. A loan management system according to claim 2 or 4, **characterized in that** said security managing means transmits either one of a notification of security deficit and a request for additional security to a terminal device of a borrower when a security margin of said borrower becomes insufficient.

23. A loan management apparatus comprising:
a balance storing section for storing a loan balance per borrower;
a security evaluating section for evaluating a value of a collateral corresponding to said loan balance; and
a loan limit calculating section for referring to said balance storing section and said security evaluating section and calculating a loan limit per borrower from said loan balance and security evaluation evaluated in said security evaluating section,
said loan management apparatus **characterized in that**
said security evaluating section refers to information about collaterals from a thing information storing device that stores information about collaterals.

24. A loan management apparatus comprising:
a balance storing section for storing a loan balance per borrower;
a security evaluating section for evaluating a value of a collateral corresponding to said loan balance; and
a security managing section for referring to said balance storing section and said security evaluating section and managing a surplus/deficit of a security margin based on said loan balance and security evaluation evaluated in said security evaluating section,
said loan management apparatus **characterized in that**
said security evaluating section refers to information about collaterals from a thing information storing device that stores information about collaterals.

25. A loan management apparatus comprising:
a balance storing section for storing a loan balance per borrower;
a security evaluation storing section for storing value evaluation of a collateral corresponding to said loan balance; and
a loan limit calculating section for referring to said balance storing section and said security evaluation storing section and calculating a loan limit per borrower from said loan balance and said value evaluation,
said loan management apparatus **characterized in that**
said security evaluation storing section refers to information about value evaluation of collaterals from a thing evaluation information storing device that stores evaluation information about collaterals.

26. A loan management apparatus comprising:
a balance storing section for storing a loan balance per borrower;
a security evaluation storing section for storing value evaluation of a collateral corresponding to said loan balance; and
a security managing section for referring to said balance storing section and said security evaluation storing section and managing a surplus/deficit of a security margin based on said loan balance and said value evaluation,
said loan management apparatus **characterized in that**
said security evaluation storing section refers to information about value evaluation of collaterals from a thing evaluation information storing device that stores evaluation information about collaterals.

27. A loan management method comprising:
a step in which a computer stores a loan balance per borrower into a storing device;
a step in which the computer evaluates a security value about a collateral corresponding to said loan balance; and
a step in which the computer calculates a loan limit per borrower from said loan balance and said security value,
said loan management method **characterized in that**
in the step of evaluating said security value, the computer evaluates the security value by referring to information about the collateral from a thing information storing device storing information about collaterals.

28. A loan management method comprising:
a step in which a computer stores a loan balance per borrower into a storing device;
a step in which the computer evaluates a security value about a collateral corresponding to said loan balance; and
a step in which the computer manages a surplus/deficit of a security margin based on said loan balance and said security value,
said loan management method **characterized in that**
in the step of evaluating said security value, the computer evaluates the security value by referring to information about the collateral from a thing information storing device recording information about collaterals.

29. A loan management method comprising:
a step in which a computer stores a loan balance per borrower into a storing device;
a step in which the computer stores a security value of a collateral corresponding to said loan balance into the storing device; and
a step in which the computer calculates a loan limit per borrower from said loan balance and said security value,
said loan management method **characterized in that**
the step of storing said security value stores the security value by referring to information about value evaluation of the collateral from a thing evaluation information storing device storing evaluation information about collaterals.

30. A loan management method comprising:
a step in which a computer stores a loan balance per borrower into a storing device;
a step in which the computer stores a security value of a collateral corresponding to said loan balance into the storing device; and
a step in which the computer manages a surplus/deficit of a security margin based on said loan balance and said security value,
said loan management method **characterized in that**
the step of storing said security value stores the security value by referring to information about value evaluation of the collateral from a thing evaluation information storing device storing evaluation information about collaterals.
